# EUROPÄISCHE PATENTSCHRIFT

(11) **EP 0 772 251 B1**
(45) Veröffentlichungstag und Bekanntmachung des Hinweises auf die Patenterteilung: **24.03.1999**
(21) Anmeldenummer: 96115126.3
(22) Anmeldetag: 20.09.1996
(51) Int. Cl.: H01M 2/26, H01M 2/24, H01M 2/06

(54) **Galvanische Zelle mit drahtförmigen Elektrodestromableitern**
Galvanic cell with electrode current collectors in the form of wires
Cellule galvanique avec des collecteurs de courant d'électrodes sous forme de fils

(30) Priorität: 06.11.1995 DE 19541255
(43) Veröffentlichungstag der Anmeldung: 07.05.1997
(73) Patentinhaber: VARTA Batterie Aktiengesellschaft, 30419 Hannover (DE)
(72) Erfinder: Sprengel, Dietrich, Dr., 58553 Halver (DE); Heydecke, Jürgen, Dr., 58553 Halver (DE); Niggemann, Eberhard, Dr., 65779 Kelkheim (DE)
(74) Vertreter: Kaiser, Dieter Ralf, Dipl.-Ing.

(56) Entgegenhaltungen:
- US-A- 3 625 772
- US-A- 4 156 756
- US-A- 4 328 293
- PATENT ABSTRACTS OF JAPAN vol. 94, no. 012 & JP 06 333545 A (YUASA CORP), 2.Dezember 1994,
- PATENT ABSTRACTS OF JAPAN vol. 006, no. 060 (E-102), 17.April 1982 & JP 57 000845 A (YUASA BATTERY CO LTD), 5.Januar 1982,
- PATENT ABSTRACTS OF JAPAN vol. 94, no. 012 & JP 06 333544 A (YUASA CORP), 2.Dezember 1994,
- PATENT ABSTRACTS OF JAPAN vol. 010, no. 050 (E-384), 27.Februar 1986 & JP 60 202662 A (SHINKOUBE DENKI KK), 14.Oktober 1985,
- PATENT ABSTRACTS OF JAPAN vol. 018, no. 077 (E-1504), 8.Februar 1994 & JP 05 290877 A (HITACHI MAXELL LTD), 5.November 1993,

## Beschreibung

Die Erfindung betrifft eine galvanische Zelle, die einen prismatischen Elektrodenplattensatz besitzt, bei dem die positven und negativen Elektrodenplatten durch Separatoren getrennt und über Stromableiter mit den entsprechenden Polbolzen verbunden sind.

Zellen der vorgenannten Art sind aus dem Dokument DE-A 2220557 bekannt. Die Stromableiter der positven bzw. negativen Elektrodenplatten werden danach auf einem mit dem jeweiligen Polbolzen verbundenen Stab durch speziell geformte Klemmstücke befestigt.

Weiterhin sind aus dem Dokument DE-A 2906853 galvanische Zellen bekannt, bei denen jeweils zwei Elektrodenplatten einer Polarität durch einen gemeinsamen Stromableiter verbunden sind und die dadurch paarweise mit dem entsprechenden Polbolzen durch Schrauben, Nieten oder Schweißen befestigt werden. Der gemeinsame Stromableiter wird dabei entweder durch Verschweißen eines Metallstreifens mit den Rändern zweier Elektrodenplatten bzw. durch Ausschneiden aus dem massefreien Bereich eines als Elektrodenplattenträger dienenden Metallbandes hergestellt.

Dokument FR-A 2651606 offenbart einen Polbolzen für einen alkalischen Akkumulator. Die streifenförmigen Stromableiter der Elektroden platten werden von zwei Seiten an den in der Zelle befindlichen Teil des Polbolzens herangebracht und mit diesem durch Punkt-schweißen verbunden. Der Polbolzen weist eine quadratische Schulter auf, die mit einem entsprechend geformten Bereich der Innenseite des Zellendeckels in formschlüssiger Verbindung steht.

In dem Dokment JP-A 57 000845 wird die Crimpverbindung eines drahtförmig ausgebildeten Endes des Polbolzens mit drahfförmigen Stromableitern der Elektroden offenbart. Die Verbindung erfolgt durch eine über die zuverbindenden Enden von Polbolzen und Stromableitern geschobene Hülse, die gequetscht wird.

Die bekannten Gestaltungen der Stromableiter der Elektrodenplatten und deren Verbindung mit den Polbolzen weisen Nachteile auf, die eine Automatisierung des Fertigungsprozesses behindern.

Die Erfindung hat sich zur Aufgabe gestellt, eine Verbindung der Elektrodenplattensätze mit den Polbolzen anzugeben, die eine automatisierte Fertigung von galvanischen Zellen der eingangs genannten Art gestattet.

Die erfindungsgemäßen galvanischen Zellen sind dadurch gekennzeichnet, daß die Stromableiter der Elektrodenplatten drahtförmig sind und mit einem hülsenförmig ausgebildeten Teil der Polbolzen durch eine Preßverbindung verbunden sind. Die drahfförmigen Stromableiter gestatten ein einfaches maschinelles Zusammenfassen und Verbinden mit den günstig herstellbaren, hülsenförmig ausgebildeten Aufnahmeteilen der Polbozen. Außerdem verringern die drahtförmigen Stromableiter die Einleitung von Biegemomenten in die Elektrodenplatten und gestatten im Zusammenwirken mit der Hülsenform des Polbolzenaufnahmeteils eine zur Kaltverschweißung führende Preßverbindung. Diese auch aus anderen Bereichen der Elektrotechnik bekannte Crimpverbindung führt zu elektrischen Verbindungen, die einen geringen elektrischen Übergangswiderstand aufweisen.

Die Befestigung der Stromableiter an den Elektrodenplatten wird vorteilhafter Weise dadurch erzielt, daß die drahtförmigen Stromableiter im Bereich der Verbindung mit den Elektrodenplatten abgeplattet und durch Punkt-, Ultraschall- oder Stumpfschweißung verbunden sind. Die erfindungsgemäße Verbindung der Stromableiter mit den Elektrodenplatten ist einfach, einer Automatisierung zugänglich und gestattet bei Schaum-, Sinter- oder Filzelektroden einen hohen Ausnutzungsgrad der zur Verfügung stehenden Elektrodenfläche.

Vorteilhafterweise sind die in den erfindungsgemäßen Zellen verwendeten Polbolzen weiterhin dadurch gekennzeichnet, daß die Polbolzen im außerhalb der Zelle befindlichen Teil des Polbolzens mit einem hülsenförmigen Aufnahmeteil versehen sind. Diese Gestaltung des außerhalb der Zelle befindlichen Teils der Polbolzen gestattet eine elektrisch sichere und automatisierbare Verbindung zu weiteren Zellen, ohne daß eine Drehmomentbelastung der Polbolzen in Kauf genommen werden muß.

Eine vorteilhafte Variante der Erfindung ist dadurch gekennzeichnet, daß der Polbolzen als Verbinder in der Zwischenwand eines mehrere Zellen enthaltenden Blockkastens eingesetzt wird, wobei er auf der einen Seite die Stromableiter der positiven Elektrodenplatten und auf der anderen Seite die der negativen Elektrodenplatten aufnimmt.

In vorteilhafter Weise wird der hülsenförmige Teil des Polbolzens nach Aufnahme der Stromableiter in eine definierte geometrische Form gepreßt. Die erfindungsgemäße Zelle ist weiterhin dadurch gekennzeichnet, daß unterhalb des Zellendeckels ein nichtleitfähiger Verdrehschutz der Polbolzen angeordnet ist, der mit der durch die Pressung erhaltenen geometrischen Gestalt der Polbolzen in formschlüssiger Verbindung steht. Die Gestaltung der Preßverbindung von Polbolzen mit den Stromableitern und das Zusammenwirken mit dem nichtleitfähigen Verdrehschutz sichern eine beschädigungsfreien Einbau der Elektrodenplattensätze.

Die erfindungsgemäßen galvanischen Zellen werden vorteilhafterweise dadurch hergestellt, daß die positiven und negativen sowie bereits mit Stromableiter versehenen Elektrodenplatten alternierend in der Weise gestapelt werden, daß die Stromableiter der jeweiligen Plattenart alle auf einer Seite zu liegen kommen, wobei zwischen den einzelnen Elektrodenplatten ein Separator eingelegt wird, die Stromableiter jeder Polarität gebündelt, auf eine einheitliche Länge gebracht und nach dem Einschieben in den hülsenförmigen Teil des Polbolzen mit diesem durch eine Preßverbindung elektrisch verbunden werden. Die vorgeschlagene Verfahrensweise gestattet im Zusammenwirken mit der Gestaltung der Stromableiter sowie den Polbolzen eine automatisierte Fertigung der galvanischen Zellen.

Vorteilhafterweise wird der Zusammenbau der Zellen in der Weise vorgenommen, daß der Zellendeckel auf die Polbolzen aufgeschoben, die Polbolzen durch den formschlüssigen Verdrehschutz gesichert und durch eine Mutter am Zellendeckel befestigt werden.

In weiterer Ausgestaltung der Erfindung erfolgt die Befestigung der Polbolzen am Zellendeckel dadurch, daß ein Überwurfring durch eine nietartige Aufweitung einer Polbolzenschulter befestigt wird.

Die erfindungsgemäße Zellengestaltung ist insbesondere für alkalische Nickel/Cadmium- oder Nickel/Metallhydrid-Akkumulatoren oder auch Lithium-Ionen-Zellen geeignet.

Die Erfindung wird nachfolgend anhand von 5 Figuren beispielhaft näher erläutert.
Figur 1 zeigt einen Polbolzen mit einem hülsenförmigen Aufnahmeteil für die Stromableiter der Elektrodenplatten.
Figur 2 zeigt einen Polbolzen mit einem hülsenförmigen Aufnahmeteil für die Stromableiter und einem hülsenförmigen Aufnahmeteil zur Verbindung mit anderen Zellen.
Figur 3 zeigt eine Verbindungsweise der Stromableiter mit den Elektrodenplatten.
Figuren 4 zeigt eine weitere Verbindungsweise der Stromableiter mit den Elektrodenplatten.
Figuren 5 zeigt eine Ausgestaltung der Verdrehschutzsicherung.

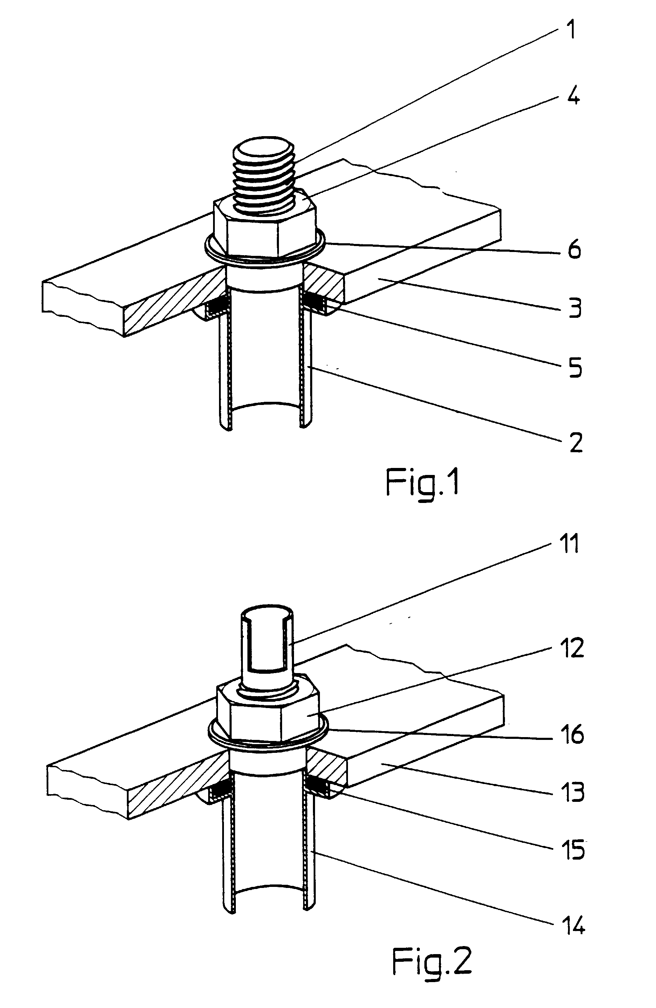

Eine erfindungsgemäße Gestaltung eines Polbolzens 1 ist in Figur 1 dargestellt. Der Polbolzen 1 besitzt ein in der galvanischen Zeile befindliches, hülsenförmiges Aufnahmeteil 2 für die drahtförmigen Stromableiter 21, 31 der Elektrodenplatten 24, 34. Der Polbolzen 1 ist von der Innenseite der Zelle durch den Zellendeckel 3 geschoben. In einer umlaufenden Vertiefung ist ein Dichtungsring 5 angeordnet. Auf dem Zellendeckel 3 befindet sich eine Sicherungsscheibe 6 und eine Mutter 4, die auf den Polbolzen 1 aufgeschraubt ist.

Figur 2 zeigt eine erfindungsgemäße Gestaltung eines Polbolzens 1, der auch unmittelbar zur Verbindung von zwei Zellen durch eine Zellenzwischenwand geeignet ist. Die hülsenförmigen Aufnahmeteile 11, 14 können dabei die Stromableiter 21, 31 von Elektrodenplatten 24, 34 unterschiedlicher Polarität aufnehmen, wenn eine Reihenschaltung der Zellen beabsichtigt ist. Der Dichtungsring 15 gewährleistet den gas- bzw. flüssigkeitsdichten Abschluß der Zellen bzw. Zellwände. Die Befestigung der Polbolzen 1 am Zellendeckel 46 bzw. der Zellenzwischenwand 13 kann auch durch eine Sicherungsscheibe 16 und eine Mutter 12 erfolgen.

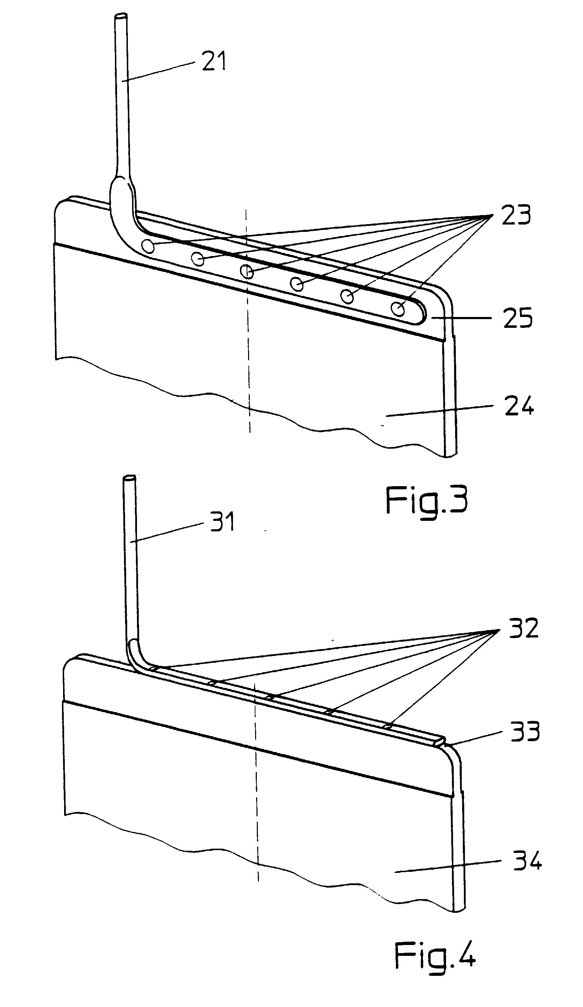

Figur 3 zeigt die Befestigung des drahtförmigen Stromableiters 21 an den massefreien Bereich 25 der Elektrodenplatten 24. Bei Faser-, Sinter- oder Schaumelektrodenträgersubstraten ist der massefreie Bereich 25 und der drahtförmige Stromableiter 21 in ihrem Überlappungsbereich 22 abgeplattet und beispielsweise durch punktuelle Schweißungen 23 verbunden.

Eine weitere Ausführungform der erfindungsgemäßen Zellengestaltung ist in der Figur 4 dargestellt. Der drahtförmige Stromableiter 31 ist dabei an eine massefreie Kante 33 der Elektrodenplatten 34 stumpf angeschweißt.

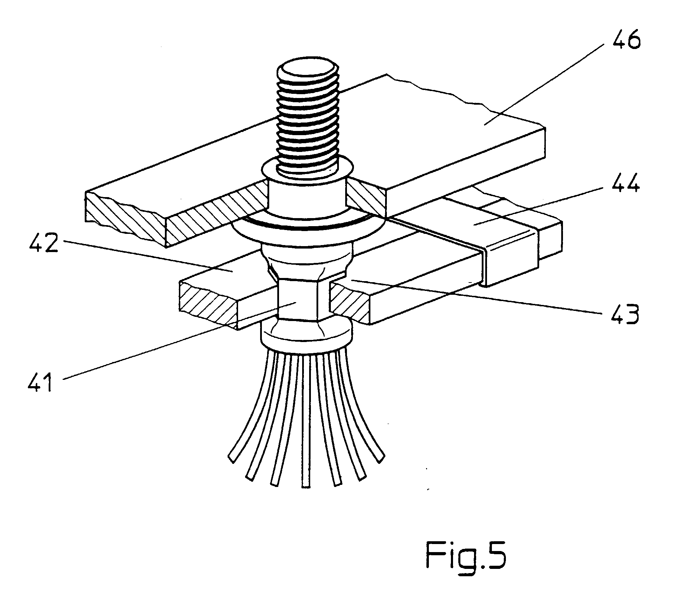

Figur 5 zeigt einen zweiteiligen Verdrehschutz für die in eine definierte geometrische Form 41 gepreßten Polbolzen. Ein Paßstück 43 wird formschlüssig in die durch die Preßverbindung des hülsenförmigen Aufnahmeteils 2 der Polbolzen 1 erhaltenen Form 41 eingesetzt. Ein Widerlager 42 mit einem Verbindungsclip 44 sichert den formschlüssigen Sitz des Paßstückes 43.

## Patentansprüche

1. Galvanische Zelle, die einen Elektrodenplattenblock besitzt, bei dem die positven und negativen Elektrodenplatten über Stromableiter mit den entsprechenden Polbolzen verbunden sind, dadurch gekennzeichnet, daß die Stromableiter (21, 31) der Elektrodenplatten (24, 34) drahtförmig sind und mit einem hülsenförmig ausgebildeten Teil (2, 14) der Polbolzen (1) durch eine Preßverbindung verbunden sind, wobei der hülsenförmige Teil (2, 14) des Polbolzen (1) nach Aufnahme der Stromableiter (21, 31) in eine definierte geometrische Form (41, 45) gepreßt wird und unterhalb des Zellendeckels (46) ein nicht leiffähiger Verdrehschutz (43) für die Polbolzen (1) angeordnet ist, der mit der durch die Pressung erhaltenen geometrischen Gestalt (41) des Polbolzen (1) in formschlüssiger Verbindung steht.

2. Zelle nach Anspruch 1, dadurch gekennzeichnet, daß die drahfförmigen Stromableiter (21, 31) im Bereich der Verbindung (25, 33) mit den Elektrodenplatten (24, 34) abgeplattet und durch Punkt-, Ultraschall- oder Stumpfschweißung verbunden sind.

3. Zelle nach Anspruch 1, dadurch gekennzeichnet, daß die Polbolzen (1) im außerhalb der Zelle befindlichen Teil mit einem hülsenförmigen Aufnahmeteil (11) versehen sind.

4. Zelle nach Anspruch 3, dadurch gekennzeichnet, daß der Polbolzen (1) als Verbinder in der Zwischenwand eines mehrere Zellen enthaltenden Blockkastens eingesetzt wird, wobei er auf der einen Seite die Stromableiter der positiven Elektrodenplatten und auf der anderen Seite die der negativen Elektrodenplatten aufnimmt.

5. Verfahren zur Herstellung einer Zelle nach einem oder mehreren der Ansprüche 1 bis 4, dadurch gekennzeichnet, daß die positiven und negativen sowie bereits mit Stromableitern (21, 31) versehenen Elektrodenplatten (24, 34) alternierend in der Weise gestapelt werden, daß die Stromableiter (21, 31) der jeweiligen Plattenart alle auf einer Seite zu liegen kommen, wobei zwischen den einzelnen Elektrodenplatten (24, 34) ein Separator eingelegt wird, die Stromableiter (21, 31) jeder Polarität gebündelt, auf eine einheitliche Länge gebracht und nach dem Einschieben in die hülsenförmigen Teile (2, 14) der Polbolzen (1) mit diesen durch eine Preßverbindung elektrisch verbunden werden.

6. Verfahren nach Anspruch 5, dadurch gekennzeichnet, daß der Zellendeckel (46) auf die Polbolzen (1) aufgeschoben, die Polbolzen (1) durch den formschlüssigen Verdrehschutz (43) gesichert und durch eine Mutter (12) am Zellendeckel (46) befestigt werden.

7. Verfahren nach Anspruch 6, dadurch gekennzeichnet, daß die Befestigung der Polbolzen (1) am Zellendeckel (46) durch eine Nietverbindung erfolgt.

## Claims

1. Electrochemical cell which has an electrode plate block in which the positive and negative electrode plates are connected via main leads to the corresponding pole bolts, characterized in that the main leads (21, 31) of the electrode plates (24, 34) are in the form of wires and are connected to a part (2, 14), which is designed in the form of a sleeve, of the pole bolts (1) by means of a press joint, the part (2, 14) of the pole bolt (1) which is in the form of a sleeve being compressed, after accommodating the main leads (21, 31), into a defined geometric shape (41, 45) and a non-conductive rotation protection device (43) for the pole bolts (1) being arranged underneath the cell cover (46) and forming a positively locking joint with the geometric shape (41) of the pole bolt (1) produced by the compression.

2. Cell according to Claim 1, characterized in that the main leads (21, 31), which are in the form of wires, are flattened in the region of the connection (25, 33) to the electrode plate (24, 34) and are connected by spot welding, ultra sound welding or butt welding.

3. Cell according to Claim 1, characterized in that the pole bolts (1) are provided with an accommodating part (11), in the form of a sleeve, in the part located outside the cell.

4. Cell according to Claim 3, characterized in that the pole bolt (1) is used as a connector in the intermediate wall of a block box which contains a plurality of cells, accommodating the main leads of the positive electrode plates on one side, and the main leads of the negative electrode plates on the other side.

5. Method for producing a cell according to one or more of Claims 1-4, characterized in that the positive and negative electrode plates (24, 34) as well as electrode plates (24,34) which are already provided with main leads (21, 31) are stacked alternately in such a manner that the main leads (21, 31) of the respective plate type all come to rest on one side, a separator being inserted between the individual electrode plates (24, 34), the main leads (21, 31) of each polarity being bundled, cut to a standard length and, after insertion into the parts (2, 14) which are in the form of sleeves, the pole bolt (1) being electrically connected to them by means of a press joint.

6. Method according to Claim 5, characterized in that the cell cover (46) is pushed onto the pole bolts (1), the pole bolts (1) are secured by the positively locking rotation protection device (43) and are attached to the cell cover (46) by means of a nut (12).

7. Method according to Claim 6, characterized in that the pole bolts (1) are attached to the cell cover (46) by means of a riveted joint.

## Revendications

1. Cellule galvanique, qui possède un bloc de plaques d'électrodes, dans lequel les plaques d'électrodes positives et négatives sont reliées au moyen de collecteurs de courant aux axes polaires correspondants,
caractérisée en ce que
les collecteurs de courant (21, 31) des plaques d'électrodes (24, 34) se présentent sous la forme de fils métalliques, et sont reliés à une pièce (2, 14), constituée en forme de manchon, des axes polaires (1) par une liaison par pressage, la pièce (2, 14) en forme de manchon de l'axe polaire (1) étant pressée après réception des collecteurs de courant (21, 31) de façon à prendre une forme géométrique définie (41, 45) et un système de protection contre toute rotation (43), non conducteur, pour les axes polaires (1) étant disposé en dessous du couvercle de la cellule (46), système qui est en liaison par complémentarité de forme avec la configuration géométrique (41) de l'axe polaire (1), obtenue par le pressage.

2. Cellule selon la revendication 1,
caractérisée en ce que
les collecteurs de courant (21, 31) en forme de fils métalliques, sont aplatis dans la zone de la liaison (25, 33) avec les plaques d'électrodes (24, 34) et sont reliés par soudage par points, soudage aux ultrasons, ou soudage bout à bout.

3. Cellule selon la revendication 1,
caractérisée en ce que
les axes polaires (1) sont pourvus dans la partie qui se trouve en dessous de la cellule d'une pièce de réception (11) en forme de manchon.

4. Cellule selon la revendication 1,
caractérisée en ce que
l'axes polaire (1) est inséré en tant qu'élément de liaison dans la paroi intermédiaire d'un boîtier contenant plusieurs cellules, l'axe polaire recevant sur l'un de ses côtés les collecteurs de courant des plaques d'électrodes positives et sur l'autre côté les plaques d'électrodes négatives.

5. Procédé de fabrication d'une cellule selon une ou plusieurs des revendications 1 à 4,
caractérisé en ce que
les plaques d'électrodes (24, 34) positives et négatives ainsi que les plaques d'électrodes qui sont déjà pourvues de collecteurs de courant (21, 31) sont empilées de façon alternée d'une manière telle que les collecteurs de courant (21, 31) du type de plaques correspondant viennent à se trouver tous d'un côté, un séparateur étant inséré entre les différentes plaques d'électrodes (24, 34), les collecteurs de courant (21, 31) de chaque polarité étant mis en bottes, découpés à la même longueur unitaire et reliés électriquement aux axes polaires par une liaison par pressage après avoir été enfilés dans les pièces (2, 14) en forme de manchon des axes polaires (1).

6. Procédé selon la revendication 5,
caractérisé en ce que
les couvercles des cellules (46) sont enfilés sur les axes polaires (1), les axes polaires (1) sont bloqués par le système de protection contre toute rotation par complémentarité de forme(43) et sont fixés par un écrou (12) sur le couvercle de la cellule (46).

7. Procédé selon la revendication 6,
caractérisé en ce que
la fixation des axes polaires (1) sur le couvercle des cellules (46) a lieu par un rivetage.
